# EUROPÄISCHE PATENTANMELDUNG

(11) **EP 0 911 140 A2**
(43) Veröffentlichungstag der Anmeldung: **28.04.1999**
(21) Anmeldenummer: 98119690.0
(22) Anmeldetag: 19.10.1998
(51) Int. Cl.: B29C 47/68

(54) **Filterelement für Kunstoffschmelzen**

(30) Priorität: 24.10.1997 DE 19747016
(71) Anmelder: GNEUSS KUNSTSTOFFTECHNIK GmbH, D-32549 Bad Oeynhausen (DE)
(72) Erfinder: Gneuss, Detlef, 32549 Bad Oeynhausen (DE)
(74) Vertreter: Grosse, Dietrich, Dipl.-Ing.

(57) **Zusammenfassung**

Die Erfindung betrifft ein Filterelement für Kunststoffschmelzen mit mehreren Filterschichten zum austauschbaren Einsatz in einem zwischen Extruder und Spritzdüse angeordneten Filterhalter. Wenigstens zwei Siebgewebe (2, 4, 6) gleicher Filterfeinheit sind hintereinander angeordnet, die durch wenigstens ein grobmaschiges Siebgewebe (3, 5) getrennt sind, wobei die teilweise für herauszufilternde Partikel durchlässige Filterfläche der vorderen Siebgewebe (2, 4) kleiner ausgebildet ist. Derartige Filterelemente werden bei der Filtration von Schmelzen oder Flüssigkeiten zur Rückhaltung von Schmutzpartikeln benötigt.

## Beschreibung

Die Erfindung betrifft ein Filterelement für Kunststoffschmelzen mit mehreren Filterschichten zum austauschbaren Einsatz in einem zwischen Pumpe oder Extruder und Werkzeug oder Düse angeordneten Filterhalter. Derartige Filterelemente werden verbreitet bei der Filtration von Schmelzen oder Flüssigkeiten zur Rückhaltung von Schmutzpartikeln benutzt.

Aus der DE 44 26 629 A1 ist ein zwischen einem Extruder und von ihm gespeisten Spritzdüsen angeordneter Filter für Kunststoffschmelzen bekannt, bei dem zur Filtration von Schmelzen oder Flüssigkeiten Schmutzpartikel, die größer als die vorhandenen Maschenweiten des Siebgewebes des Filters sind, zurückgehalten werden. Wenn das Siebgewebe, welches z.B. aus Metalldraht oder Metallspänen hergestellt sein kann, sich mit Partikeln vollgesetzt hat, so daß der Durchflußwiderstand zu hoch wird, muß das Siebgewebe gegen ein neues ausgetauscht werden. Dies wird beim obengenannten Gegenstand durch eine mit dem Siebhalter kuppelbare Antriebsvorrichtung erreicht. Soll nun bei einer derartigen Filtervorrichtung die Siebstandzeit vergrößert werden, ist eine entsprechend große Siebfläche zu spezifizieren. Dadurch bedingt verlangsamt sich jedoch der Schmelzefluß, so daß sich negative Folgeerscheinungen ergeben können.

Die Erfindung geht von der Aufgabe aus, ein Filterelement der eingangs genannten Art zu schaffen, das bei gleicher Filterabmessung eine höhere Siebstandzeit ermöglicht.

Die Aufgabe wird erfindungsgemäß durch die Merkmale des Patentanspruchs 1 gelöst.

Durch die hintereinander angeordneten zwei oder mehreren Siebgewebe gleicher bzw. annähernd gleicher Filterfeinheit jedoch mit unterschiedlichen Abmessungen der effektiven Filterfläche können alle Siebe Schmutzpartikel abtrennen. Somit ergibt sich bei gleichen Filterflächen gegenüber den bekannten Filtern eine mindestens doppelt so große Siebstandzeit.

Die unterschiedlichen Abmessungen der effektiven Filterfläche können erfindungsgemäß dadurch erreicht werden, daß die vorderen Siebgewebe für herauszufilternde Partikel teilweise durchlässig ausgeführt sind, wobei die Siebgewebe gleiche Abmessungen aufweisen können, oder daß die vorderen Siebgewebe einen kleineren Durchmesser als das Siebgewebe für die Endfiltration aufweisen, so daß ein Teil der Schmelze an dem Siebgewebe ungehindert vorbeiströmen kann.

Erfindungswesentlich dabei ist, daß die Durchlässigkeit auf die Viskosität der Kunststoffschmelze derart abgestimmt ist, daß die verbleibende Filterfläche aktiv auf herauszufilternden Partikel wirkt.

Es hat sich als vorteilhaft erwiesen, wenn in Abhängigkeit von Viskosität und Filterfeinheit die Durchlässigkeit für herauszufilternde Partikel 1 % bis 30 % der Filterfläche beträgt.

Eine besonders vorteilhafte Ausführung ergibt sich, wenn das Filterelement eine erste Schutzlage aufweist, der zwei für herauszufilternde Partikel teilweise durchlässig Feinfilter folgen, die durch ein erstes grobmaschiges Siebgewebe mit Drainagewirkung getrennt sind, daß nach dem zweiten, für herauszufilternde Partikel teilweise durchlässigen Feinfilter ein durch ein zweites grobmaschiges Siebgewebe mit Drainagewirkung getrennter Feinfilter folgt, der durch eine zweite Schutzlage abgestützt wird. Dabei kann der erste Feinfilter eine Durchlässigkeit für herauszufiltendere Partikel von 30 % der Filterfläche und der zweite Feinfilter eine Durchlässigkeit für herauszufilternde Partikel von 1 % der Filterfläche aufweisen. Die gröberen Zwischenlagen dienen zur Drainage, damit durch Querströmung die Siebflächen auch aktiv genutzt werden.

Erfindungsgemäß kann die Durchlässigkeit der Siebgewebe z.B. durch gestanzte Löcher oder durch in das Siebgewebe eingeflochtene Drähte größeren Durchmessers gegeben sein.

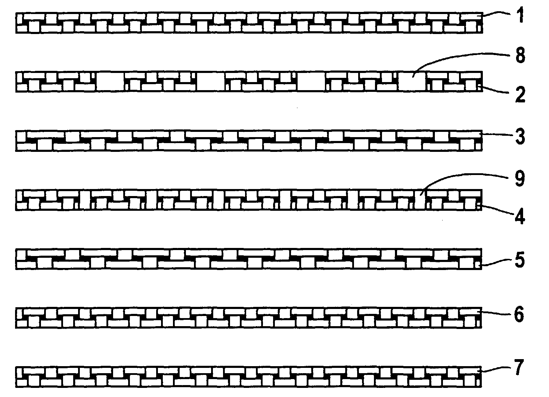

Die Erfindung ist nachfolgend anhand eines in der Zeichnung dargestellten Ausführungsbeispieles näher erläutert.

In der Figur ist der erfindungsgemäße Schichtaufbau des mehrstufigen Filterelementes auseinandergezogen dargestellt. An seiner in Fließrichtung betrachteten Oberseite weist das Filterelement eine erste Schutzlage 1 auf, die das ausschnittsweise dargestellte Filterpaket zusammenhält. Der ersten Schutzlage 1 folgt ein erster Feinfilter 2 mit einer ersten definierten teilweisen Durchlässigkeit für herauszufilternde Partikel. Die nächste Filterschicht bildet ein erstes grobmaschiges Siebgewebe 3, das den ersten Feinfilter 2 von einem zweiten Feinfilter 4 trennt, welches eine zweite definierte teilweise Durchlässigkeit für herauszufilternde Partikel aufweist. Nach dem zweiten Feinfilter 4 folgt ein durch ein zweites grobmaschiges Siebgewebe 5 getrennter dritter Feinfilter 6 ohne größere als über die durch die Filterfeinheit gegebenen Durchlässigkeit. Dieser Feinfilter 6 wird durch eine zweite Schutzlage 7 abgestützt.

Die teilweise Durchlässigkeit für herauszufilternde Partikel der beiden Feinfilter 2 und 4 kann gleich aber auch verschieden sein. Sie läßt sich beispielsweise durch das Stanzen von kleinen Löchern oder durch das Einflechten von Drähten in das Gewebe erreichen, die bedingt durch einen größeren Durchmesser auch eine größere Maschenweite ergeben. Die Größe der Löcher bzw. der Durchmesser der Drähte der Siebgewebe und damit die Durchlässigkeit für herauszufilternde Partikel beider Feinfilter 2 und 4 kann gleich sein. Zur Erreichung einer unterschiedlichen Durchlässigkeit kann der Abstand der Löcher in dem obersten Siebgewebe kleiner ausgeführt sein als bei den nachfolgenden Siebgeweben. Es können aber auch, wie in der Figur dargestellt ist, unterschiedliche Abmessungen gewählt werden, wobei beispielsweise der erste Feinfilter 2 zweckmäßigerweise Löcher 8 aufweist, die größer als die Löcher 9 des zweiten Feinfilters 4 sind.

Durch diese Anordnung zweier oder mehrerer Siebgewebe gleicher Abmessung und gleicher bzw. annähernd gleicher Filterfeinheit hintereinander, wobei sie durch ein oder mehrere grobmaschige dazwischen lagernde Siebgewebe voneinander getrennt sind, erreicht man eine hervorragende Filterwirkung bei einer kleinen Filterfläche. Damit alle nacheinander gelagerten Siebgewebe mit der engsten Filterfeinheit auch aktive Schmutz-partikel abtrennen können und diese nicht nur von der ersten Filterlage erfaßt werden, sind die vorderen Filterlagen zumindest in Teilbereichen durchlässig ausgebildet. Die Durchlässigkeit kann beispielsweise 1 % bis 30 % der Filterfläche betragen, wobei darauf geachtet werden muß, daß die Durchlässigkeit auf die Viskosität der Schmelze oder Flüssigkeit so abgestimmt wird, daß die verbleibende Filterfläche aktiv auf die herauszufilternden Partikel wirkt. Die gröberen Zwischenlagen dienen zur Drainage, damit durch Querströmung die Siebflächen auch aktiv genutzt werden.

Mit einem so aufgebauten Filterpaket ergibt sich somit eine gute Tiefenfiltration, die zum Beispiel bei gleichem Filterdurchmesser zu einer mehrfachen Filtrierleistung bzw. größeren Filterstandzeit führt.

Erfindungsgemäß können auch die Filterlagen vor der letzten Endfiltration, die beiden Feinfilter 2 und 4, beispielsweise im Durchmesser kleiner ausgeführt sein, so daß die Randzonen dieser Feinfilter 2 und 4 umspült werden. Dadurch ergibt sich ebenfalls eine derartige Filterwirkung. Auch können bei einer derartigen Filteranordnung zusätzlich die beiden Feinfilter 2 und 4 noch teilweise durchlässig ausgebildet sein.

### Bezugszeichenliste

- 1: erste Schutzlage
- 2: erster teilweise durchlässiger Feinfilter
- 3: erster Drainagelagefilter
- 4: zweiter teilweise durchlässiger Feinfilter
- 5: zweiter Drainagelagefilter
- 6: dritter Feinfilter
- 7: zweite Schutzlage
- 8 und 9: Löcher

## Patentansprüche

1. Filterelement für Kunststoffschmelzen mit mehreren Filterschichten (2 bis 6) zum austauschbaren Einsatz in einem zwischen Pumpe oder Extruder und Werkzeug oder Düse angeordneten Filterhalter,
**dadurch gekennzeichnet,**
daß wenigstens zwei Siebgewebe (2, 4, 6) gleicher bzw. annähernd gleicher Filterfeinheit hintereinander angeordnet sind, die durch wenigstens ein grobmaschiges Siebgewebe (3, 5) getrennt sind, wobei die effektive Filterfläche der in Schmelz-Fließrichtung vorderen Siebgewebe (2, 4) kleiner ausgebildet ist als die effektive Filterfläche des in Schmelze-Fließrichtung letzten Siebgewebes (6).

2. Filterelement nach Anspruch 1,
**dadurch gekennzeichnet,**
daß die in Schmelze-Fließrichtung vorderen Siebgewebe (2, 4) teilweise für die herauszufilternden Partikel durchlässig ausgeführt sind.

3. Filterelement nach Anspruch 1 oder 2,
**dadurch gekennzeichnet,**
daß die Siebgewebe (2, 4, 6) gleiche Abmessungen aufweisen.

4. Filterelement nach Anspruch 1 oder 2,
**dadurch gekennzeichnet,**
daß die vorderen Siebgewebe (2, 4) einen kleineren Durchmesser als das Siebgewebe (6) für die Endfiltration aufweisen.

5. Filterelement nach einem der Ansprüche 1 bis 4,
**dadurch gekennzeichnet,**
daß die Durchlässigkeit für herauszufiltende Partikel auf die Viskosität der Kunststoffschmelze derart abgestimmt ist, daß die verbleibende Filterfläche aktiv auf herauszufilternden Partikel wirkt.

6. Filterelement nach einem der Ansprüche 1 bis 5,
**dadurch gekennzeichnet,**
daß die Durchlässigkeit für herauszufilternde Partikel 1 % bis 30 % der Filterfläche beträgt.

7. Filterelement nach einem der Ansprüche 1 bis 6,
**dadurch gekennzeichnet,**
daß das Filterelement eine erste Schutzlage (1) aufweist, der zwei teilweise für herauszufilternde Partikel durchlässige Feinfilter (2, 4) folgen, die durch ein erstes grobmaschiges Siebgewebe mit Drainagewirkung (3) getrennt sind, daß nach dem zweiten teilweise für herauszufilternde durchlässigen Feinfilter (4) ein durch ein zweites grobmaschiges Siebgewebe mit Drainagewirkung (5) getrennter Feinfilter (6) folgt, der durch eine zweite Schutzlage (7) abgestützt wird.

8. Filterelement nach Anspruch 7,
**dadurch gekennzeichnet,**
daß der erste Feinfilter (2) eine Durchlässigkeit für herauszufiltende Partikel von bis zu 30 % der Filterfläche und der zweite Feinfilter (4) eine Durchlässigkeit für herauszufiltende Partikel von 1 % der Filterfläche aufweist.

9. Filterelement nach einem der Ansprüche 1 bis 8,
**dadurch gekennzeichnet,**
daß die Durchlässigkeit der Siebgewebe (2, 4) für herauszufilternde Partikel durch Löcher (8, 9) gegeben ist.

10. Filterelement nach einem der Ansprüche 1 bis 8,
**dadurch gekennzeichnet,**
daß die Durchlässigkeit für herauszufilternde Partikel durch in das Siebgewebe (2, 4) eingeflochtene Drähte größeren Durchmessers gegeben ist.

11. Filterelement nach einem der Ansprüche 1 bis 8,
**dadurch gekennzeichnet,**
daß die Durchlässigkeit für herauszufilternde Partikel durch kleinere Filterdurchmesser und die sich dadurch ergebende Randumspülung gewährleistet ist.
